Europäisches Patentamt

European Patent Office

Office européen des brevets

(11) Numéro de publication : **0 388 845 B1**

# FASCICULE DE BREVET EUROPEEN

(45) Date de publication du fascicule du brevet :
**02.11.94 Bulletin 94/44**

(51) Int. Cl.$^5$ : **H02P 5/40, H02P 7/62**

(21) Numéro de dépôt : **90105126.8**

(22) Date de dépôt : **19.03.90**

(54) **Système de commande vectorielle pour moteur électrique asynchrone à cage.**

(30) Priorité : **21.03.89 FR 8903685**

(43) Date de publication de la demande :
**26.09.90 Bulletin 90/39**

(45) Mention de la délivrance du brevet :
**02.11.94 Bulletin 94/44**

(84) Etats contractants désignés :
**AT BE CH DE ES FR GB IT LI NL SE**

(56) Documents cités :
**EP-A- 119 583**
**EP-A- 157 202**
**DE-A- 3 221 906**
**DE-A- 3 438 210**
**DE-A- 3 523 665**

(56) Documents cités :
**PATENT ABSTRACTS OF JAPAN vol. 6, no. 226 (E-141)(1104) 11 novembre 1982, & JP-A-57 129190 (MEIDENSHA) 11 août 1982**
**SIEMENS-ZEITSCHRIFT VOL.45 N.10 OCT.1971 PAGES 761-784**
**SIEMENS FORSCHUNGS- UND ENTWIC-KLUNGSBERICHTE VOL.1 N.1/72 1972 PAGES 184-193**
**AUTOMATISIERUNGSTECHNISCHE PRAXIS ATP 29. ANNEE N.2 1987 PAGES 83-88**

(73) Titulaire : **GEC ALSTHOM SA**
**38, avenue Kléber**
**F-75116 Paris (FR)**

(72) Inventeur : **Poline, Pierre**
**Chemin des Corbettes**
**F-01600 Trevoux (FR)**

(74) Mandataire : **Weinmiller, Jürgen et al**
**Lennéstrasse 9**
**Postfach 24**
**D-82336 Feldafing (DE)**

EP 0 388 845 B1

## Description

La présente invention concerne un système de commande vectorielle pour moteur électrique asynchrone à cage alimenté par un générateur d'impulsions modulées en largeur commandant un onduleur fournissant, à partir d'une tension continue, au moins une tension alternative d'alimentation au moteur asynchrone.

Dans les locomotives à moteurs électriques, il est devenu courant d'employer des moteurs asynchrones. Un ou plusieurs moteurs sont alimentés par un onduleur fournissant, à partir d'une tension continue de source, éventuellement obtenue par redressement, une tension alternative triphasée ayant la fréquence requise.

Cette fréquence est déterminée à partir de la vitesse de rotation du moteur. Lorsqu'elle est supérieure à la fréquence qui correspond à la vitesse de rotation du moteur, il se produit un glissement entre le rotor et le flux dans le moteur, lequel engendre un couple tendant à accélérer la rotation du rotor. Lorsqu'elle est égale ou inférieure, le moteur est freiné.

Aux allures rapides de marche d'une locomotive, la commande du moteur, à l'aide d'une manette de commande de couple, consiste donc essentiellement à ajuster la fréquence engendrée par l'onduleur, en fonction de l'écart constaté entre le couple demandé et le couple moteur, qui est évalué à partir du courant et de la tension fournis au moteur. La tension fournie au moteur dite tension de pleine onde est alors constante et sa valeur crête est égale à $2/\pi$ fois la tension continue de source ; l'onduleur fonctionne comme un simple inverseur à la fréquence qui lui est demandée par une commande de fréquence.

Aux allures de marche réduites, la tension doit être réduite, afin de régler le flux dans le moteur, de manière à ce que soient minimisées les pertes dans le moteur et dans l'onduleur. La commande du moteur demande alors, non seulement l'ajustement de la fréquence indiqué plus haut, mais aussi un ajustement de la tension alternative fournie au moteur. L'onduleur reçoit donc, en plus d'une commande de fréquence, une commande de module de la tension à fournir et, en réponse à ces deux commandes, il fonctionne alors en mode de découpage. Le circuit de commande de l'onduleur engendre des impulsions modulées en largeur dont l'intégration produit une tension sinusoïdale ayant la fréquence requise et l'amplitude réduite demandée.

En pratique, l'onduleur lui-même, comprenant essentiellement des commutateurs de puissance est distinct de son circuit de commande qui reçoit et traite les signaux de commande indiqués et fournit les signaux de déclenchement des commutateurs de puissance. En raison de ce que son rôle prédominant est la production de signaux de déclenchement d'impulsions modulées en largeur, ce circuit de commande sera appelé, dans ce qui suit, modulateur d'impulsions.

L'invention concerne plus particulièrement le système de commande engendrant les signaux de commande de fréquence et de commande de module de tension pour les fournir audit modulateur d'impulsions, en régime de marche réduite.

De tels système de commande sont connus. On trouvera une discussion à leur sujet dans l'article "Adjustable speed AC drives - A technology status review" de B.M. Bose, publié dans la revue "Proceedings of the IEEE", Vol.70, No.2, Février 1982. Généralement, un tel système de commande engendre le signal de commande de fréquence à partir de la commande de couple, le couple demandé étant comparé au couple développé par le moteur, déterminé à partir des mesures de tensions et courants effectuées sur le moteur, pour fournir un signal d'erreur de couple, traité ensuite pour déterminer un signal d'écart de fréquence, lequel est additionné à une fréquence représentant la rotation du rotor, pour fournir un signal de commande de fréquence. Parallèlement, l'observation du flux dans le moteur, par rapport à une valeur constante de consigne de flux, détermine le signal de commande de tension. Un tel dispositif, comprenant deux boucles de commande indépendantes n'est ni précis, ni stable, et il ne permet pas d'atteindre une efficacité proche de l'optimum.

La présente invention a donc pour objet un système de commande vectorielle pour moteur electrique asynchrone à cage permettant d'atteindre une meilleure efficacité et une stabilité plus grande.

Le système de commande vectorielle pour moteur électrique asynchrone à cage de l'invention comprend des moyens d'évaluation, par rapport à un référentiel fixe, du module et de la phase d'un au moins des flux dans le moteur, des moyens d'évaluation de premières composantes en phase et en quadrature, par rapport audit flux, d'au moins un courant fourni au moteur, des moyens d'évaluation de la vitesse de rotation du moteur et des moyens d'évaluation de la tension continue d'alimentation. Il comprend en outre des moyens de détermination de secondes composantes en phase et en quadrature, par rapport audit flux dans le moteur, définissant une tension de commande, en fonction au moins desdites premières composantes et d'une valeur de couple demandée.

Un tel système se retrouve dans le document DE-A-3221906. Lesdites secondes composantes en phase et en quadrature ($U_{I,m}$), après conversion de référentiel, commandent directement le générateur d'impulsions et par suite les tensions moteur. Il ne peut donc s'appliquer dans le cadre défini plus haut de la commande du modulateur d'impulsions indiqué dont on rappelle qu'il nécessite des signaux de commande de fréquence et de module de tension. En effet, une simple conversion de coordonnées cartésiennes en coordonnées polaires fournirait une phase et un module de tension, ce qui ne convient pas à la commande du modulateur d'impulsions.

L'article "Eine neue Generation digital geregelter Drehstrom-Hauptspindelantriebe" de K. Klausecker et al, paru dans Automatisierungstechnische Praxis atp, n°2, 1987, pages 83-88, propose toutefois un système de commande vectorielle. Mais, ce système n'est pas conforme à ce qui précède en ce qu'il n'exploite pas des grandeurs électromagnétiques observées sur le moteur, mais simplement sa vitesse. La commande de fréquence ainsi fournie n'est autre que l'addition de la vitesse du rotor, d'une valeur de glissement désiré, dérivée d'un commande de vitesse, et d'un terme correcteur prédéterminé, dérivé de la tension voulue. Il s'agit alors d'un système de commande en boucle ouverte, incapable de corriger les éventuelles erreurs sur la vitesse, les effets de la température moteur, etc.

L'invention vise un système de commande vectoriel tel que défini plus haut, dans lequel est résolu le problème de la fourniture de signaux de commande appropriés au générateur d'impulsions indiqué, dans des conditions qui assurent une commande précise et une correction automatique d'erreurs éventuelles dans les grandeurs mesurées ou l'effet des grandeurs de commande.

L'invention parvient à ce résultat en ce que le système de commande comprend aussi des moyens pour convertir lesdites secondes composantes en une représentation polaire correspondante comprenant un module et un argument, le module étant directement fourni audit générateur d'impulsions, pour commander l'amplitude de la tension fournie au moteur, tandis que l'argument est fourni à un dispositif de commande de phase recevant aussi ladite phase du flux et une valeur de phase de la tension produite par le générateur d'impulsions et établissant une valeur de correction de fréquence qui est additionnée à une valeur de fréquence statorique pour constituer le signal de commande de fréquence transmis au générateur d'impulsions et y commander la fréquence de la tension fournie au moteur de manière telle que l'écart entre ladite phase du flux et ladite valeur de phase tende à devenir égal audit argument.

Selon une autre caractéristique de l'invention, ledit couple demandé étant exprimé sous la forme d'une valeur demandée de flux et d'une valeur demandée de ladite première composante en quadrature du courant fourni au moteur, ladite seconde composante de tension en phase est déterminée à partir de l'écart entre ledit module du flux dans le moteur et ladite valeur demandée de flux, et ladite seconde composante de tension en quadrature est déterminée à partir de l'écart entre ladite composante en quadrature du courant fourni au moteur et ladite valeur demandée de la première composante en quadrature du courant fourni au moteur, lesdites déterminations étant effectuées dans chaque cas par un régulateur proportionnel et intégral.

Selon une autre caractéristique de l'invention, lesdites déterminations incluent chacune une correction de la composante produite, en fonction des valeurs servant à déterminer l'autre composante, de façon que la détermination d'une composante soit, autant que possible, accompagné d'une compensation de l'effet que cette détermination a sur la valeur de l'autre composante.

Selon une autre caractéristique de l'invention, ladite valeur de la fréquence statorique est obtenue par l'addition à une valeur de fréquence dérivée de la rotation du rotor d'une valeur d'écart de fréquence déterminée à partir desdites composante de courant.

Les différents objets et caractéristiques de l'invention seront maintenant exposés dans de plus amples détails au cours de la description qui va suivre d'un exemple de mise en oeuvre de l'invention donné à titre non limitatif, en se référant aux figures annexées qui représentent :

- la figure 1, un diagramme du système de commande vectorielle pour moteur électrique à cage de l'invention,
- la figure 2, le schéma électrique équivalent du moteur, valable en régime établi seulement, pour l'une quelconque des trois phases, et
- la figure 3, un diagramme vectoriel représentant les champs, courants et tensions dans le schéma de la figure 2,
- la figure 4, le diagramme d'un mode de réalisation du dispositif de régulation REG de la figure 1.

Les moteurs asynchrones dont il s'agit sont généralement triphasés. Le système de commande de l'invention traite des valeurs relatives à l'alimentation du moteur. Il engendre des signaux de commande et les fournit à un générateur d'impulsions modulées en largeur MLI, lequel reçoit ces signaux de commande et fournit à un onduleur OND alimentant le moteur M les trois signaux de déclenchement Fsmot, correspondant à trois tensions alternatives triphasées. Ce générateur MLI reçoit ainsi un signal de commande Mod, qui définit l'amplitude de la tension triphasée à fournir au moteur (en pourcentage d'une tension continue d'alimentation de puissance UF , par exemple). Il reçoit aussi un signal de commande Fsmli qui définit la fréquence de la tension alternative triphasée à fournir au moteur.

Le système de commande de l'invention est associé, de façon classique, à des moyens pour obtenir des entrées du moteur la valeur des courants Is1 à Is3 et des tensions Vs1 à Vs3 fournis par l'onduleur pour les trois phases, ainsi que, le cas échant, des moyens pour obtenir la valeur de tensions magnétisantes Um1 à Um3 fournies par des spires de flux disposées dans le moteur. Par ailleurs, une valeur Fr est également obtenue du moteur et caractérise la vitesse de rotation du rotor.

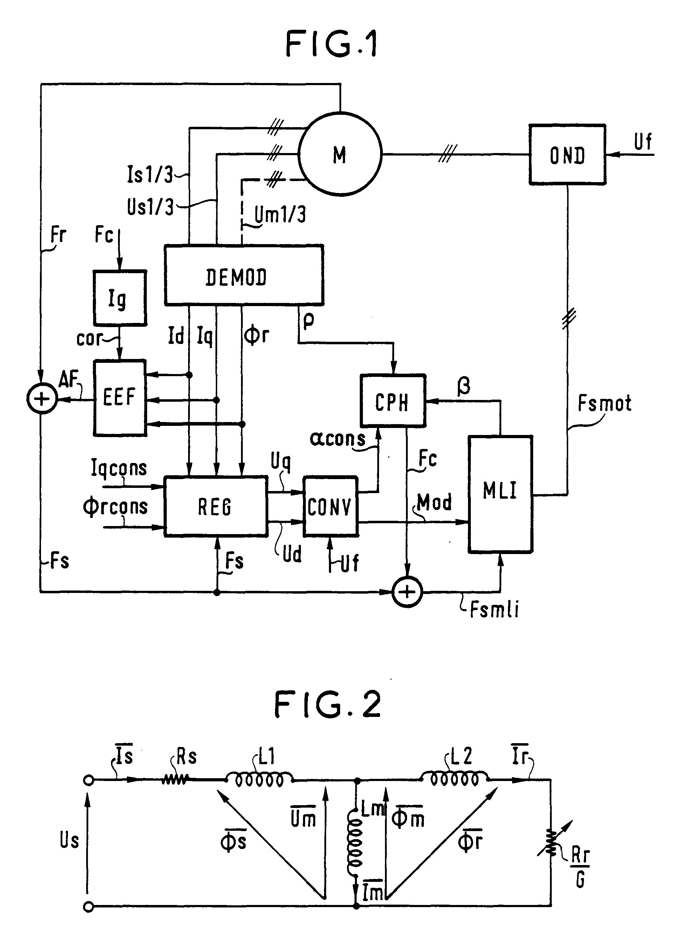

Le schéma électrique équivalent du moteur, en régime établi seulement, pour chacune des phases, est représenté à la figure 2. La tension Us engendre un courant $\overline{Is}$ produisant un flux statorique $\overline{\phi s}$, lequel, après déduction des pertes $L1,\overline{Is}$, fournit le flux magnétisant $\overline{\phi m}$. C'est ce flux qui est évalué par les spires de flux mentionnées précédemment et qui est traduit en une tension $\overline{Um}$. Le courant rotorique $\overline{Ir}$ est dérivé du courant statorique $\overline{Is}$ et induit le flux rotorique $\overline{\phi r}$, lequel, après déductions des pertes $Lr.\overline{Ir}$ fournit aussi le flux magnétisant $\overline{\phi m}$. La résistance ohmique du stator est représentée en Rs, en série avec les inductances de fuite L1 et magnétisante Lm. La résistance rotorique est indiquée en Rr/G. Elle est variable et inversement proportionnelle au glissement G.

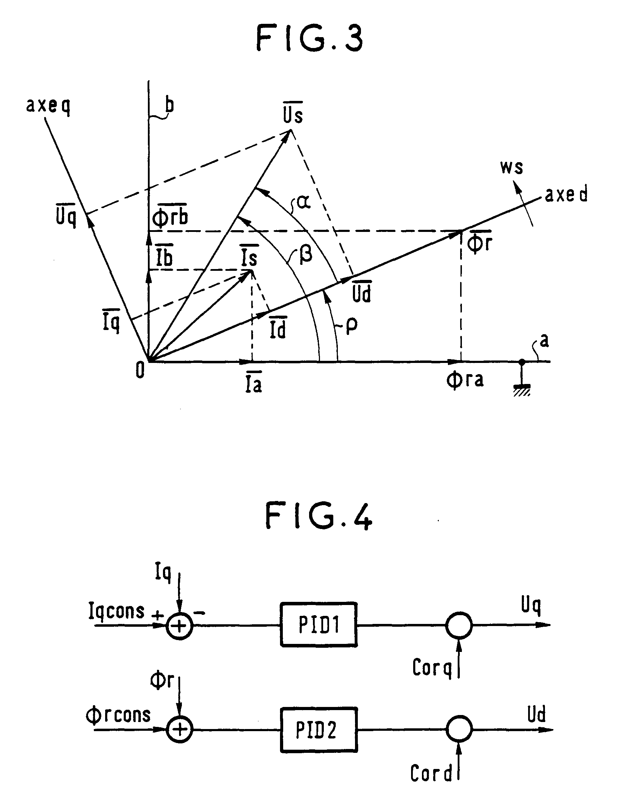

Le diagramme de la figure 3 représente le flux $\overline{\phi r}$ tournant à la vitesse $\omega s$ par rapport à un référentiel fixe aOb. Les projections de $\overline{\phi r}$ sur les axes Oa et Ob sont représentées en $\overline{\phi ra}$ et $\overline{\phi rb}$. L'angle entre le vecteur de flux $\overline{\phi r}$ et l'axe Oa est $\rho$. Le vecteur de courant $\overline{Is}$ et le vecteur de tension $\overline{Us}$ sont également représentés à la figure 3, avec leurs projections, $\overline{Id}$, $\overline{Ud}$ et $\overline{Iq}$, $\overline{Uq}$, sur les axes Od, colinéaire au vecteur $\overline{\phi r}$, et Oq, en quadrature avec ce dernier. Les composantes $\overline{Ia}$ et $\overline{Ib}$ du courant $\overline{Is}$ dans le référentiel fixe sont également représentées.

En revenant maintenant à la figure 1, les courants et tensions instantanés sur les trois phases, Is1/3 et Us1/3, ainsi que les tensions instantanées des spires de flux permettent, dans un module de démodulation DEMOD, d'établir les valeurs Id, Iq, $\phi r$ or $\rho$. Les valeurs Id et Iq sont les composantes du courant Is dans le référentiel lié au flux $\overline{\phi r}$. Les formules permettant d'établir les valeurs des flux indiqués à la figure 2 à partir des tensions Um1/3 fournies par les spires de flux sont les suivantes :

$$\overline{\phi m} = \int \overline{Um}\ dt$$
$$\overline{\phi s} = \overline{\phi m} + L1.\overline{Is}$$
$$\overline{\phi r} = Lr/Lm.\overline{\phi m} - L2.\overline{Is}$$

En l'absence de spires de flux, les valeurs de flux peuvent cependant être établies à l'aide des formules suivantes :

$$\overline{\phi s} = \int(\overline{Us} - Rs.\overline{Is})\ dt$$
$$\overline{\phi m} = \overline{\phi s} - L1.\overline{Is}$$
$$\overline{\phi r} = \frac{Lr}{Lm}\ \overline{\phi s} - \left(\frac{Lr\ L1}{Lm} + L2\right)\overline{Is}$$

Ainsi, par intégration des tensions $\overline{Um}$1/3, on obtient des flux magnétisants $\overline{\phi m}$1/3. Une transformation de Fortescue fournit des composantes dans le référentiel fixe de la figure 3 :

$$\phi ma = \sqrt{1,5}\ \phi m1$$
$$\phi mb = \sqrt{0,5}\ (\phi m1 + 2\phi m2)$$

et de là on obtient la valeur du module du vecteur flux magnétisant :

$$\phi m = \sqrt{\phi ma^2 + \phi mb^2}$$

De la même façon, les composantes du flux rotoriques dans le référentiel fixe sont établies par les formules :

$$\phi ra = (1 + L2/Lm)\phi ma - L2.Ia$$
$$\phi rb = (1 + L2/Lm)\phi mb - L2.Ib$$

et le module de flux rotorique par :

$$\phi r = \sqrt{\phi ra^2 + \phi rb^2}$$

tandis que l'argument est fourni par :

$$\rho = Arccos\ \phi ra/\phi rb\ ou\ Arcsin\ \phi rb/\phi ra$$

L'établissement des composantes en phase et en quadrature du courant Is dans le référentiel lié au vecteur $\overline{\phi r}$ s'obtient à partir des courants $\overline{Is}$1 et $\overline{Is}$2, lesquels, par transformation de Fortescue, fournissent les courant Ia et Ib :

$$Ia = \sqrt{1,5}\ I1$$
$$Ib = \sqrt{0,5}\ (I1 + 2.I2)$$

Ensuite, géométriquement :

$$Id = (\phi ra.Ia + \phi rb.Ib)/\phi r$$
$$Iq = (\phi ra.Ib - \phi rb.Ia)/\phi r$$

Les composantes de courant ainsi établies et le module du flux rotorique $\phi r$ sont fournis à un dispositif de régulation REG qui reçoit par ailleurs deux valeurs Iqcons et $\phi r$cons. Ces valeurs sont dérivées de façon classique d'une commande manuelle de couple par un dispositif de traduction qui fait correspondre à chaque valeur de couple demandée, une valeur de flux rotorique et une valeur de courant en quadrature. Le dispositif de régulation REG a pour fonction de faire en sorte que ces valeurs soient atteintes.

Plus particulièrement, le dispositif de régulation REG a pour fonction d'engendrer des composantes Uq et Ud (voir fig.2) dont la composition définit un vecteur de tension $\overline{Us}$ devant être appliqué au moteur. Comme le générateur MLI n'accepte qu'une commande d'amplitude et une commande de fréquence, le dispositif de régulation REG est suivi d'un étage de conversion de coordonnées CONV qui fait correspondre à chaque couple de valeurs Uq, Ud, le module Mod du vecteur Us et un argument $\alpha$cons définissant ce vecteur dans le référentiel tournant. La figure 4 représente, de façon simplifiée, les opérations accomplies dans le dispositif REG. On voit que la valeur de la composante Iq observée sur le moteur est soustraite de la valeur de composante de courant en quadrature Iqcons, l'écart étant amplifié, intégré et/ou dérivé par l'étage de régulation PID1, pour fournir une valeur de composante de tension en quadrature Uq, la boucle s'équilibrant lorsque la composante de courant en quadrature Iq observée sur le moteur est égale à celle qui est demandée Iqcons. De la même façon, le module de flux $\phi r$ est soustrait du module de flux demandé $\phi r$cons et l'écart est amplifié, intégré et/ou dérivé dans l'étage de régulation PID2, pour fournir une composante de tension Ud, la boucle s'équilibrant lorsque le module du flux dans le moteur est égale au module de flux demandé.

Après conversion dans l'étage CONV, les composantes Uq et Ud fournissent le signal de commande Mod, qui est l'amplitude de la tension à fournir au moteur, ainsi que l'argument $\alpha$cons qui est l'angle que forme ce vecteur avec l'axe Od.

La tension d'alimentation du moteur Uf est appliquée à l'étage CONV et il en est tenu compte dans la détermination du signal de commande Mod.

L'argument $\alpha$cons est appliqué à une circuit de calcul de phase CPH qui reçoit par ailleurs l'angle $\rho$ qui décrit la position du référentiel tournant, par rapport au référentiel fixe, telle qu'elle est observée sur le moteur, et l'angle $\beta$ qui est indiqué par le générateur MLI et qui situe le vecteur de tension par rapport au référentiel fixe. A l'équilibre :

$$\beta - \rho = \alpha\text{cons}$$

et le signal de correction de fréquence Fc est nul.

Par ailleurs, le glissement du moteur peut être évalué comme un écart de fréquence $\Delta F$ qui est égal à la différence entre la fréquence qui caractérise la vitesse de rotation du champ tournant et une fréquence qui caractérise la rotation du rotor. On sait que cet écart de fréquence est fonction du rapport entre les composantes de courant Iq et Id (ou de l'angle du module du flux $\phi$r par rapport au courant). Le dispositif EEF recevant les composantes Id et Iq (ou $\phi$r) évalue cet écart de fréquence $\Delta F$ en effectuant le rapport entre les deux composantes, affecté d'un coefficient approprié.

La figure 1 représente également une entrée cor du dispositif EEF qui reçoit un signal Fc par l'intermédiaire d'un étage d'intégration Ig. On verra que le signal Fc est un signal d'erreur. L'intégration de ce signal d'erreur sur une période suffisamment longue, 1 mn, par exemple, permet de déceler une erreur continue qui viendrait d'une mauvaise évaluation de l'écart de fréquence $\Delta F$. Le signal fourni à l'entrée cor a pour effet, dans le dispositif EEF, de corriger une telle erreur.

La vitesse de rotation du rotor est directement obtenue par un capteur de vitesse fournissant une valeur Fr. En lui ajoutant l'écart de fréquence ci-dessus décrit, on obtient donc une valeur de fréquence Fs correspondant à la vitesse de rotation du champ statorique. Tant que le signal de correction de fréquence Fc est nul, cette valeur Fs est appliquée au générateur MLI sous la forme du signal de commande de fréquence Fsmli qui définit la fréquence de la tension appliquée au moteur M. Le signal d'écart de fréquence $\Delta F$ est tel qu'un ralentissement du moteur tend à réduire la fréquence fournie par le générateur d'impulsions MLI pour que l'angle entre le courant et le flux reste limité.

Lorsque le signal Fc n'est pas nul, il s'ajoute au signal Fs et le signal Fsmli est modifié dans un sens tel que l'argument $\rho$ du flux moteur tend à se maintenir à une distance angulaire égale à $\alpha$cons de l'angle de la tension appliquée au moteur.

Les différents discpositifs constituant le système de commande vectorielle de l'invention peuvent être réalisés chacun sous la forme d'un processeur autonome, ou d'une cellule de traitement dans un processeur contenant tous les dispositifs représentés. Les opérations d'intégration portant sur les tensions observées aux entrées du moteur peuvent être effectuées analogiquement. Ensuite, de préférence, les valeurs analogiques sont échantillonnées et converties en valeurs numériques. Le calcul qui dans le dispositif de démodulation DEMOD établit les valeurs de Id, Iq, Or, puis celui qui, dans le dispositif de régulation REG et le dispositif de conversion CONV établit le module et l'argument du vecteur tension à produire, dans le référentiel tournant, sera effectué périodiquement. La fréquence peut être de quelques cycles complets par seconde seulement. Le signal de commande Mod est donc remis à jour avec cette fréquence. Le signal Fr qui mesure la vitesse de rotation du moteur peut être établi avec une fréquence bien supérieure. Il est complété par l'écart de fréquence $\Delta F$ à la cadence de fonctionnement des dispositifs DEMOD et EEF. A la même cadence, le signal Fs résultant peut être modifié par le signal de correction de fréquence Fc produit par le dispositif CPH, pour fournir le signal de commande de fréquence Fsmli.

## Revendications

1. Système de commande vectorielle pour moteur électrique asynchrone à cage alimenté par un générateur d'impulsions modulées en largeur commandant un onduleur fournissant, à partir d'une tension continue, au moins deux tensions alternatives d'alimentation au moteur asynchrone, ce système comprenant des moyens d'évaluation, par rapport à un référentiel fixe, du module ($\phi$r) et de la phase ($\rho$) d'un au moins des flux ($\phi$r) dans le moteur, des moyens d'évaluation de premières composantes en phase (Id) et en quadrature (Iq), par rapport audit flux ($\phi$r), d'au moins deux courants ($\overline{\text{Is}}$) fourni au moteur (M), des moyens d'évaluation de la vitesse de rotation (Fr) du moteur, ainsi que des moyens d'évaluation de la tension continue d'alimentation du moteur (Uf) et des moyens (REG) de détermination de secondes composantes en phase (Ud) et en quadrature (Uq), par rapport audit flux ($\phi$r) dans le moteur, définissant une tension de commande ($\overline{\text{Us}}$), en fonction au moins desdites premières composantes (Id, Iq) et d'une valeur de couple demandée ($\phi$rcons, Iqcons), **caractérisé en ce** qu'il comprend aussi des moyens (CONV) pour convertir lesdites secondes composantes (Ud, Uq) en une représentation polaire correspondante comprenant un module (Mod) et un argument ($\alpha$cons), le module étant directement fourni audit générateur d'impulsions (MLI), pour commander l'amplitude de la tension fournie au moteur, tandis que l'argument est fourni à un dispositif de commande de phase (CPH) recevant aussi ladite phase du flux (ρ) et une valeur de phase (β) de la tension produite par le générateur d'impulsions (MLI) et établissant une valeur de correction de fréquence (Fc) qui est additionnée à une valeur de fréquence statorique (Fs) pour constituer le signal de commande de fréquence (Fsmli) transmis au générateur d'impulsion (MLI) et y commander la fréquence de la tension fournie au moteur de manière telle que l'écart entre ladite phase du flux et ladite valeur de phase tende à devenir égal audit argument.

2. Système de commande vectorielle pour moteur électrique asynchrone à cage conforme à la revendication 1, caractérisé en ce que ledit couple demandé étant exprimé sous la forme d'une valeur demandée de flux (φrcons) et d'une valeur demandée de ladite première composante en quadrature (Iqcons) du courant fourni au moteur, ladite seconde composante de tension en phase (Ud) est déterminée à partir de l'écart entre ledit module (φr) du flux dans le moteur et ladite valeur demandée de flux (φrcons), et ladite seconde composante de tension en quadrature (Uq) est déterminée à partir de l'écart entre ladite composante en quadrature (Iq) du courant fourni au moteur et ladite valeur demandée de la première composante en quadrature (Iqcons) du courant fourni au moteur, lesdites déterminations étant effectuées dans chaque cas par un régulateur proportionnel, intégral et/ou à dérivation (PID1, PI2D).

3. Système de commande vectorielle pour moteur électrique asynchrone à cage conforme à la revendication 2, caractérisé en ce que lesdites déterminations incluent chacune une correction (Corq, Cord) de la composante produite en fonction des valeurs servant à déterminer l'autre composante, de façon que la détermination d'une composante soit, autant que possible, accompagné d'une compensation de l'effet que cette détermination a sur la valeur de l'autre composante.

4. Système de commande vectorielle pour moteur électrique asynchrone à cage conforme à la revendication 1, caractérisé en ce que ladite valeur de la fréquence du courant statorique (Fs) est obtenue par l'addition à une valeur de fréquence dérivée de la rotation du rotor (Fr) d'une valeur d'écart de fréquence (ΔF) déterminée à partir desdites composantes en phase et en quadrature du courant fourni au moteur.

**Patentansprüche**

1. Vektor-Steuersystem für einen Asynchronmotor mit Kurzschlußkäfig, das von einem Impulsgenerator mit Pulsbreitenmodulation gespeist wird und einen Wechselrichter steuert, der aus einer Gleichspannung mindestens zwei Speisewechselspannungen für den Asynchronmotor erzeugt, wobei das System aufweist: Mittel zur Ermittlung der Amplitude (φr) und der Phase (ρ) mindestens eines der Flüsse (φr) im Motor relativ zu einem festen Bezugswert; Mittel zur Ermittlung erster Komponenten in Phase (Id) und in Quadratur (Iq) mindestens zweier an den Motor (M) gelieferter Ströme (Is) relativ zu dem genannten Fluß (φr); Mittel zur Ermittlung der Drehgeschwindigkeit (Fr) des Motors sowie Mittel zur Ermittlung der Speisegleichspannung des Motors (Uf); und Mittel (REG) zur Bestimmung zweiter eine Steuerspannung (Us) definierender Komponenten in Phase (Ud) und in Quadratur (Uq) relativ zu dem genannten Fluß φr im Motor, in Abhängigkeit mindestens von den ersten Komponenten (Id, Iq) und einem verlangten Momentenwert (φrcons, Iqcons), dadurch gekennzeichnet, daß weiter Mittel (CONV) zum Umwandeln der zweiten Komponenten (Ud, Uq) in eine entsprechende polare Darstellung mit einer Vektorlänge (Mod) und einem Argument (acons) vorgesehen sind, wobei die Vektorlänge direkt an den Impulsgenerator (MLI) geliefert wird, um die Amplitude der an den Motor gelieferten Spannung zu steuern, während das Argument an eine Phasensteuereinrichtung (CPH) geliefert wird, die weiter die genannte Phase des Flusses (ρ) und einen Phasenwert (β) der vom Impulsgenerator (MLI) erzeugten Spannung empfängt und einen Frequenzkorrekturwert (Fc) bildet, der zu einem Ständerfrequenzwert (Fs) addiert wird, um das Frequenzsteuersignal (Fsmli) zu bilden, das an den Impulsgenerator (MLI) geliefert wird, um dort die Frequenz der an den Motor gelieferten Spannung zu steuern, derart, daß der Abstand zwischen der Phase des Flusses und dem Phasenwert dahin tendiert, gleichgroß wie das Argument zu werden.

2. Vektor-Steuersystem für einen Asynchronmotor mit Kurzschlußkäfig gemäß Anspruch 1, dadurch gekennzeichnet, daß die zweite Spannungsphasenkomponente (Ud), wenn das verlangte Moment in Form eines verlangten Wertes des Flusses (φrcons) und eines verlangten Wertes der ersten Komponente in Quadratur (Iqcons) des an den Motor gelieferten Stroms ausgedrückt wird, aus dem Abstand zwischen der Amplitude (φr) des Flusses im Motor und dem verlangten Wert des Flusses (φrcons) bestimmt wird, und daß die zweite Spannungskomponente in Quadratur (Uq) aus dem Abstand zwischen der in Quadratur liegenden Komponente (Iq) des an den Motor gelieferten Stromes und dem verlangten Wert der ersten Komponente in Quadratur (Iqcons) des an den Motor gelieferten Stromes bestimmt wird, wobei die Bestimmungen in jedem Fall durch einen Proportional-, Integral- und/oder Differentialregler (PID1 PI2D) bewirkt werden.

3. Vektor-Steuersystem für einen Asynchronmotor mit Kurzschlußkäfig gemäß Anspruch 2, dadurch gekennzeichnet, daß jede der Bestimmungen eine Korrektur (Corq, Cord) der erzeugten Komponente in Abhängigkeit von den Werten einschließt, die zur Bestimmung der anderen Komponente dienen, derart, daß die Bestimmung einer Komponente soweit wie möglich mit einer Kompensation der Wirkung einhergeht, die diese Bestimmung auf den Wert der anderen Komponente ausübt.

4. Vektor-Steuersystem für einen Asynchronmotor mit Kurzschlußkäfig gemäß Anspruch 1, dadurch gekennzeichnet, daß der Wert der Frequenz des Ständerstromes (Fs) durch Addition eines Frequenzabstandwertes (ΔF), der aus den Komponenten des an den Motor gelieferten Stromes in Phase und in Quadratur bestimmt wird, und eines Frequenzwerts erhalten wird, der aus der Drehung des Läufers (Fr) abgeleitet ist.

**Claims**

1. A vector control system for a squirrel-cage asynchronous electric motor and powered by a width-modulated pulse generator controlling an inverter which converts a DC voltage into at least two AC feed voltages for asynchronous motor, the system comprising means for evaluating the modulus (φr) and the phase (ρ) of at least one of the fluxes (φr) in the motor relative to a fixed frame of reference, means for evaluating first in-phase and quadrature components (Id, Iq) relative to said flux (φr) of at least two of the currents ($\overline{Is}$) supplied to the motor (M), means for evaluating the speed of rotation (Fr) of the motor, and means for evaluating the DC motor feed voltage (Uf), means (REG) for determining second in-phase and quadrature components (Ud, Uq) relative to said flux (φr) in the motor, and defining a control voltage ($\overline{Us}$) as a function at least one of said first components (Id, Iq) and a requested torque value (φrcons, Iqcons), the system being characterized in that it also comprises means (CONV) for converting said second components (Ud, Uq) into a corresponding polar representation having a modulus (Mod) and an argument (acons), with the modulus being supplied directly to said pulse generator (MLI) in order to control the amplitude of the voltage supplied to the motor, while the argument is supplied to a phase control module (CPH) which also receives said flux phase (ρ) and a phase value (β) of the voltage produced by the pulse generator (MLI), and which establishes a frequency correction value (Fc) which is added to a stator frequency value (Fs) in order to constitute the frequency control signal (Fsmli) transmitted to the pulse generator (MLI) in order to control the frequency of the voltage supplied thereby to the motor in such a manner that the difference between said flux phase and said phase value tends to become equal to said argument.

2. A vector control system for a squirrel-cage asynchronous electric motor in accordance with claim 1, the system being characterized in that said requested torque is expressed in the form of a requested flux value (φrcons) and a requested value of said first quadrature component (Iqcons) of the current supplied to the motor, and said second in-phase voltage component (Ud) is determined from the difference between said modulus (φr) of the flux in the motor and said requested flux value (φrcons), and the said second quadrature voltage component (Uq) is determined from the difference between said quadrature component (Iq) of the current supplied to the motor and said value requested for the first quadrature component (Iqcons) of the current supplied to the motor, each of said determinations being performed by a respective proportional, integral, and/or differential regulator (PID1, PID2).

3. A vector control system for a squirrel-cage asynchronous electric motor in accordance with claim 2, characterized in that each of said determinations includes a correction (Corq, Cord) of the component produced as a function of values serving to determine the other components, such that the determination of one component is, as far as possible, accompanied by compensation for the effect of this determination on the value of the other component.

4. A vector control system for a squirrel-cage asynchronous electric motor in accordance with claim 1, characterized in that the said value of the frequency of the stator current (Fs) is obtained by adding a frequency difference value (ΔF) determined from the said in-phase and quadrature components of the current supplied to the motor to a frequency value which is derived from the rotation of the rotor (Fr).

# FIG.1

# FIG.2

# FIG.3

# FIG.4